# EUROPEAN PATENT APPLICATION

(11) **EP 3 975 080 A1**
(43) Date of publication of application: **30.03.2022**
(21) Application number: 20198982.9
(22) Date of filing: 29.09.2020
(51) Int. Cl.: G06Q 10/04, G06Q 10/06

(54) **AUTOMATED RISK DRIVEN PATCH MANAGEMENT**

(71) Applicant: Siemens Aktiengesellschaft, 80333 München (DE); Federal University of Rio de Janeiro, 21941-901 Rio de Janeiro (BR)
(72) Inventor: PFLEGER DE AGUILAR, Leandro, 08691 Robbinsville , NJ (US); MENASCHÉ, Daniel Sadoc, 22011-002 Rio de Janeiro (BR); MARTINS, Matheus, 08536 Plainsboro Township, NJ (US); BICUDO, Miguel Angelo Santos, 24120-170 Niteroi, Rio de Janeiro (BR); JANSSEN, Henning, 76189 Karlsruhe (DE)
(74) Representative: Isarpatent

(57) **Abstract**

A computer-implemented method for assessing risk over time of a vulnerability includes collecting data pertaining to reported vulnerabilities from one or more platforms into a database. The collected data is curated to provide defined vulnerability features and historical data on vulnerability events pertaining to the reported vulnerabilities. Upon receiving an input specifying a vulnerability for which risk is to be assessed, the method includes identifying a vulnerability class of the specified vulnerability by a classifier based its vulnerability features. The method includes processing historical data on vulnerability events pertaining to the subset of the reported vulnerabilities to generate, for the specified vulnerability, a risk curve predicting an evolution of a temporal risk score parametrized based on occurrence of vulnerability events. The risk curve is predictive of a time of occurrence of a weaponization and/or exploitation event of the specified vulnerability with an associated temporal risk score.

## Description

### TECHNICAL FIELD

The present disclosure relates to management of software patch installation. Described embodiments provide an approach for automated tracking and prediction of risk associated with vulnerabilities to support decision-making with respect to installation of software patches.

### BACKGROUND

Unpatched published vulnerabilities represent the most likely attack vector for software. In particular, industrial control systems pose an unsolved problem to the security community. There are a number of reasons why patching industrial control system components is typically not performed immediately after the patch disclosure or vulnerability disclosure. Fixes incorporated into the patches have to be exhaustively tested as a general rule, both by the vendor and by the asset owner, prior to patching to avoid the shut-down costs associated with an improper fix to control systems. In addition, some patches require a complete system reboot, which might have to be synchronized with plant maintenance schedules where a production outage is already expected. Given the desire to greatly limit downtime in industrial manufacturing, it is crucial to understand which components and vulnerabilities deserve the most attention.

Prioritization of patching may be useful for government agencies responsible for providing support during massive attack campaigns. Having information about industrial control components where the attack is more likely may guide use of limited resources and expertise.

US10331429 B2 describes methods, systems, and computer-based systems for patch management of an industrial control system, including a system to allow the prediction of the temporal evolution of risk due to vulnerabilities to help prioritize and schedule patching. A Markov chain representing temporal evolution was proposed using asset (e.g., industrial control system component) specific information to determine risk over time and then using this risk information to prioritize and/or schedule patching. The operators are provided with more information to help manage patching of the industrial control system, allowing better balancing of risk with manufacturing burden.

### SUMMARY

Briefly, aspects of the present disclosure provide a technique for assessing temporal evolution of risk of a vulnerability, which may aid management of patch installation, for example, in an industrial control system.

A first aspect of the disclosure sets forth a computer-implemented method for assessing risk over time of a vulnerability associated with a software product or hardware device. The method comprises collecting data pertaining to reported vulnerabilities from one or more platforms into a database. The collected data is curated to provide defined vulnerability features and historical data on vulnerability events pertaining to the reported vulnerabilities. The method comprises receiving an input specifying a vulnerability for which risk is to be assessed. The method then comprises extracting vulnerability features of the specified vulnerability from the database and feeding the extracted vulnerability features to a classifier to identify a vulnerability class of the specified vulnerability. The method then comprises producing a subset of the reported vulnerabilities that belong to the identified vulnerability class of the specified vulnerability. The method then comprises processing historical data on vulnerability events pertaining to said subset of the reported vulnerabilities to generate, for the specified vulnerability, a risk curve predicting an evolution of a temporal risk score over time, the temporal risk score parametrized based on occurrence of vulnerability events. The risk curve is predictive of a time of occurrence of one or more weaponization events and/or one or more exploitation events of the specified vulnerability with an associated temporal risk score thereof.

A further aspect of the disclosure implements features of the above-described method in computer systems and computer program products.

A further aspect of the disclosure sets forth a method for management of patch installation. The method comprises identifying a list of vulnerabilities pertaining to one or more assets. The method further comprises assessing risk over time for each specified vulnerability in the list by generating at least one risk curve per vulnerability by the above-mention method according to the first aspect of the disclosure. The method then comprises prioritizing the list of vulnerabilities based on the assessed risk of each vulnerability. Subsequently, the method comprises implementing installation of patches on the one or more assets to remediate the vulnerabilities based on the prioritized list of vulnerabilities.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 is a flowchart illustrating the steps involved in creating a model for predicting temporal evolution of risk associated with a vulnerability according to an example embodiment.
FIG. 2 is a block diagram illustrating a system architecture in accordance with an example embodiment.
FIG. 3 is a flowchart illustrating an overview of a method for generating a risk curve for a specified vulnerability.
FIG. 4 is a flowchart illustrating in detail a method for generating one or more risk curves for a specified vulnerability based on multiple classification approaches according an example embodiment.
FIG. 5 illustrates an exemplary visualization of a risk curve based on a cumulative distribution function of time to first weaponization event.
FIG. 6 illustrates an exemplary visualization of a risk curve based on a time series of temporal risk scores.
FIG. 7 is a flowchart illustrating a method for management of patch installation according an aspect of the disclosure.

### DETAILED DESCRIPTION

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Patch management is a critical aspect of securing industrial control systems against software attacks. Due to the intrinsic critical nature of industrial control systems, traditional information-technology approaches may not apply in most cases. Additional information about vulnerabilities and risks are to be considered to support patch decisions that minimize risks while maximizing availability of the controlled production processes. As a result, industrial control systems may have a number of unpatched systems for which updates are available.

In order to provide better and realistic insights about risks involved in patching or not patching a given industrial control system for each vulnerability disclosure, the resources invested towards patch management are prioritized. Measurements, models, and/or recommendations aid the decision making in cases where the most likely attack vector and time has to be identified. The patching may be more efficiently scheduled based on the provided information.

The present disclosure is directed to the problem of dynamically tracking risks associated with vulnerable software products and/or hardware devices, for example, in an industrial control system. Embodiments of the disclosure use automated classification techniques, for instance, based on machine learning models, to identify a vulnerability class of a specified vulnerability. The vulnerability class being identified, historical data pertaining to the identified vulnerability class is processed to generate, for the specified vulnerability, a risk curve predicting an evolution of a temporal risk score over time. The temporal risk score is parametrized based on occurrence of vulnerability events. The risk curve is predictive of a time of occurrence of one or more weaponization events and/or exploitation events of the specified vulnerability with an associated temporal risk score for each event. Using the proposed methodology, patch management may be guided in real-time to help in the context of a continuously evolving threat landscape (external view) and the overall plant asset exposure to security attacks (internal view).

There are standard risk scores, such as the Common Vulnerability Scoring System (CVSS), which encompass temporal scores to assess how risks evolve over time. However, the CVSS score alone may not be effective as a metric for prioritizing vulnerabilities. Most government sponsored efforts to make vulnerabilities public, such as the U.S. Government based repository National Vulnerabilities Database (NVD), do not provide the CVSS temporal scores for many reported vulnerabilities, and even if they do, the CVSS temporal score is not updated based on vulnerability events, such as remediation events, weaponization events, or exploitation events. Moreover, the CVSS is typically used for analyzing data and risks in retrospect (in hindsight), after disclosure of vulnerabilities and exploits, but is not tailored for predictive purposes (in foresight).

There are challenges involved in the adoption of CVSS scores for risk analysis and prediction. First, there is no standard mechanism to automatically parametrize those scores from real data. Second, CVSS temporal scores may not be significantly sensitive to important vulnerability events, such as weaponization and exploitation events. Third, CVSS scores do not account for how the standard deviation of the risk varies over time.

In order to use temporal risk scores, such as CVSS temporal scores, for predictive purposes, the present disclosure provides a simplified model which determines how different vulnerability events impact these scores, and that allows prediction of the time until the occurrence of those events (e.g., exploit releases).

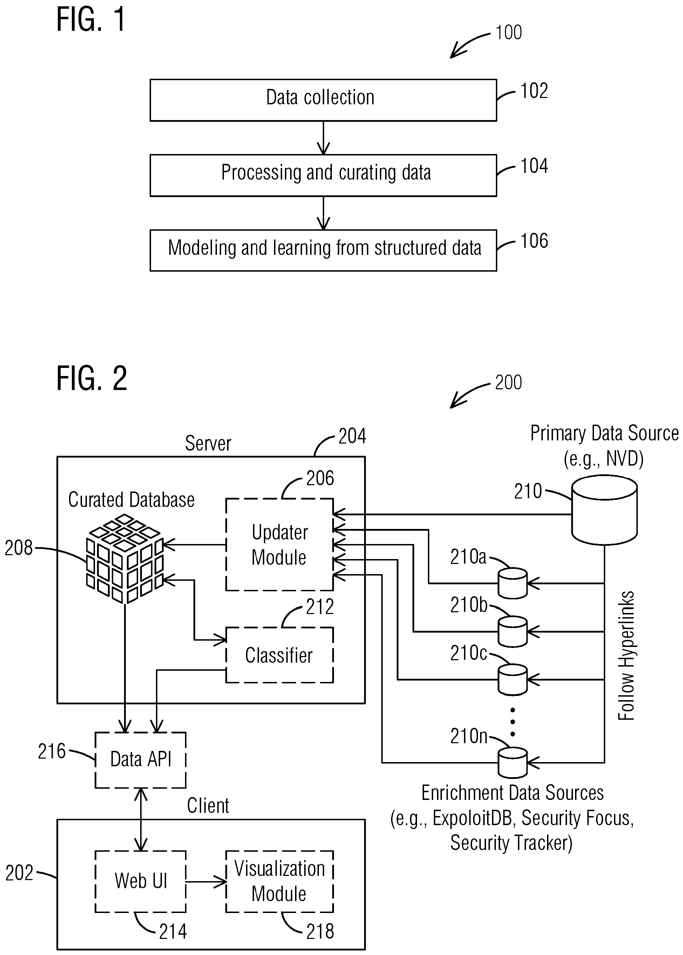

FIG. 1 illustrates a process 100 for creating a model for predicting temporal evolution of risk associated with a vulnerability according to an example embodiment. The operational blocks shown in FIG. 1 are performed in the order shown (numerically or top to bottom) or in another order. In one embodiment, the operational blocks are executed repeatedly in a periodic manner, to refine or update the model.

Block 102 comprises data collection. In this operation, information on reported vulnerabilities is collected from one or more platforms (e.g., websites). Based on the collected data, vulnerability features and historical data on vulnerability events associated with the reported vulnerabilities are extracted and organized in a subsequent operation (block 104).

Vulnerability events are defined as events that relate to weaponization, remediation or exploitation of a vulnerability. A weaponization event is said to occur when an exploit code (e.g., proof-of-concept, functional, high) has been developed for a vulnerability. A remediation event is said to occur when a fix for the vulnerability is available (e.g., official fix or patch, temporary fix or hot-fix, workaround). An exploitation event is said to occur when an exploit has been maliciously used, for instance, in an attack campaign.

In the example approach proposed here, a public vulnerability database, such as NVD is used as the primary data source. For each vulnerability, NVD reports its Common Vulnerability Exposures (CVE^{®}) identifier along with security advisories pertaining to the CVE^{®} identifier. For each CVE^{®} identifier, NVD further reports a list of hyperlinks to security advisories on other platforms. These other platforms may serve as enrichment data sources. Such sources may include exploit hubs where weaponization information is made available, such as ExploitDB, Security Tracker, Security Focus, Github, among others. In particular, ExploitDB already contains, for many of the exploits in its catalog, the corresponding CVE^{®} identifiers, which allows relating exploits to vulnerabilities. In addition, weaponization data can also be collected from forums or social media platforms, including those in the dark web. In some embodiments, the data collected may also include information on exploitation events. Information on exploitation events may be obtained, for example, from black hat forums (e.g., CrimeBB) and threat intelligence feeds (TI feeds). These platforms contain information not only about weaponization but also about exploitation of vulnerabilities in the wild.

In one embodiment, the data collection operation comprises, for each vulnerability reported on the public vulnerability database (e.g., NVD), following hyperlinks reported on the public vulnerability database to security advisories on other platforms, and downloading hyperlinked files pertaining to the security advisories from the other platforms. In this case, the content provided by NVD and the other platforms (e.g., following the hyperlinks) are downloaded, typically, as HTML or JSON files.

Block 104 comprises processing and curating the collected data. This operation involves extracting defined vulnerability features and historical data on vulnerability events pertaining to the reported vulnerabilities and organizing the extracted information in a curated database.

The vulnerability features comprise information which may be available, for example, from public vulnerability databases such as NVD, typically at the time of vulnerability disclosure. The vulnerability features are used as features or characteristics for constructing one or more models in a subsequent operation (block 106). In various embodiments, the vulnerability features may include at least a subset of features selected from: date of vulnerability disclosure, CVSS base score, CVSS sub-score components, vulnerability description in plain text, Common Weakness Enumeration (CWE^{™}) identifier, date of generation of CVSS, date of last modification of event history, product(s) affected by vulnerability, and manufacturers of affected product(s).

Vulnerability events may be identified from the security advisories reported on public vulnerability databases (e.g., NVD) or other platforms (e.g., following hyperlinks). Extracting historical data may comprise determining, for each vulnerability event (represented by a security advisory), an event class (e.g., weaponization, remediation, exploitation) and a time of occurrence of the vulnerability event. For example, dates and classes of the security advisories may be extracted from the downloaded files (e.g. HTML files, JSON files) from one or multiple platforms. Part of this information is made publicly available, for example, by NVD. To get the dates at which each advisory was published, temporal information of the downloaded files may be extracted using XML Path Language (XPath). The extracted temporal information is used to represent the time (e.g., date) of occurrence of the vulnerability events represented by the security advisories. It is possible to account for the specifics of the format of the HTML files provided by each platform. Each platform corresponds to a given XPath parametrization to extract the HTML element corresponding to the publication dates of the advisories posted by that platform. In many of the enrichment data sources and forums, the data includes non-structured textual information, which may be parsed to extract a date and class of security advisories (vulnerability events).

In one embodiment, after implementing the above steps, for each security advisory, the following elements are organized and stored in the database, namely: (i) publication date, (ii) NVD hyperlink, (iii) list of CVE^{®} identifiers at NVD that contain that hyperlink, (iv) class of the hyperlink.

Block 106 comprises modeling and learning from the structured data in the database. This operation involves extracting temporal information about vulnerability events associated with all reported vulnerabilities (e.g., CVE^{®} identifiers reported at NVD). The result is a dataset of time series encompassing vulnerabilities and the dates of release of corresponding exploits, patches and advisories, which are typical events in the vulnerability life cycle. A subsequent step involves parametrizing temporal risk scores (e.g. CVSS temporal score) to map vulnerability events into vulnerability life cycle states and risk values. This temporal risk score measures the evolution of risk as exploits, patches and advisories appear in a time series of events.

An embodiment of the present disclosure provides a technique to parametrize the temporal risk score based on historical data using a heuristic rule-based method to map vulnerability events, such as weaponization events (e.g., exploit releases) and remediation events (e.g., patch releases) to the temporal risk scores. The described embodiment pertains, in particular, to parametrization of CVSS (v2.0 and v3.0) temporal scores based on occurrence of vulnerability events from historical data. However, it is to be understood that the underlying approach may be extended to other temporal risk scoring systems, including but not limited to future versions of CVSS.

CVSS has a set of temporal metrics which form a CVSS temporal score. The CVSS temporal score is used to assess risk over time as security events occur and aims to account for event information and to capture changes in risk and its severity. However, despite the existence of this model, the CVSS temporal score is said to be optional and is currently not parameterized by the organizations responsible for CVSS. The following is a description the CVSS temporal metrics, their possible states as currently known (for example, from NVD) and the respective proposed heuristics for event mappings proposed in this disclosure.

*Exploitability (EX):* This metric measures the current state of exploitation techniques of a given vulnerability, categorizing their maturity. For example, the existence of proofs of concept or malicious functional exploit codes is captured by this metric. The public availability of a malicious program increases the number of possible attacks and, consequently, increases the severity of the vulnerability. Currently known states are: (i) Unproven: No exploit is available, or exploitation of the vulnerability is entirely theoretical; (ii) Proof-of-Concept: An exploit code in the form of proof of concept or a non-practical demonstration of attack for most systems is available. The code or technique is not functional in all situations and may require substantial modifications by a skilled attacker; (iii) Functional: The code of a functional exploit is available. The code works in most situations where the vulnerability exists; (iv) High: The vulnerability is exploitable by a standalone exploit code that is mobile and functional, or no exploit is required, and the details are widely available to the public. The code works in any situation or is being actively used through a mobile autonomous agent (such as a worm or virus). The descriptions of these known states are publicly available, for example, from NVD.

*Proposed parameterization heuristics:* To map vulnerability events in the lifecycle of a vulnerability to the above states, the following heuristics are applied: exploit maturity is categorized according to the number of exploits encountered for that vulnerability. That is, the first reported exploit is mapped as proof-of-concept, the second functional and the third, High. This is an effective heuristic for mapping the occurrence of events of exploits. The heuristic is based on the idea that hackers are motivated to create new exploits if there is room for improvements in the existing exploits. It should be noted that creating a new exploit is a highly complex task. The emergence of a functional exploit for the general public (e.g., that can be used by script kiddies) indicates that preexisting malicious code was possibly just proof of concept (PoC).

*Remediation Level (RL):* The maturity level of a vulnerability fix is an important factor for patching prioritization. A vulnerability usually does not have a patch at the time of its publication. Workarounds or hot-fixes may offer temporary remediation until an official patch or update is issued. Each of these stages causes a decrease in the CVSS temporal score, reflecting a reduced risk as remediation becomes final. Currently known states are: (i) Official Fix: A complete manufacturer solution that fixes the vulnerability is available. The manufacturer has issued an official patch or an update is available; (ii) Temporary Fix: There is an official, but temporary, fix available. This includes instances where the vendor issues a hot-fix, a tool, or a temporary solution; (iii) Workaround: There is an unofficial, non-commercial solution available. In some cases, users of the affected technology will either create a patch of their own or provide steps to circumvent or mitigate the vulnerability; (iv) Unavailable: There is no solution available or it is impossible to apply. The descriptions of these known states are publicly available, for example, from NVD.

*Proposed parameterization heuristics:* To map vulnerability events in the lifecycle of a vulnerability to the above states, the following heuristics are applied: When there is a link in the NVD vulnerability history table that is classified as patch, its date is collected and its event is mapped as Official Fix. If another patch link is found, the first one is mapped as Temporary Fix and the second as Official Fix. The motivation here is similar to that described in the section above. In addition, when links are classified as third party advisory, the corresponding state is mapped as Workaround.

*Report Confidence (RC):* This metric measures the degree of confidence in the existence of a vulnerability and the credibility of known technical details. Sometimes only the existence of vulnerabilities is disclosed, but without specific details. The vulnerability can later be corroborated and then confirmed through recognition by the author or manufacturer of the affected technology. The more a vulnerability is validated by the vendor or other trusted sources, the higher the score. Currently known states are: (i) Unconfirmed: There is a single unconfirmed source or possibly multiple conflicting reports. There is little confidence in the validity of reports. An example is a rumor that arises between hacker forums and black exploit markets; (ii) Reasonable (previously known as Uncorroborated): There are several unofficial sources, possibly including independent security companies or research organizations. At this point, there may be conflicting technical details or some other remaining ambiguity; (iii) Confirmed: The vulnerability has been recognized by the vendor or author of the affected technology. The vulnerability can also be confirmed when its existence is confirmed from an external event, such as publication of functional exploit code or proof of concept or widespread exploitation. The descriptions of these known states are publicly available, for example, from NVD.

*Proposed parameterization heuristics:* To map vulnerability events in the lifecycle of a vulnerability to the above states, the following heuristics are applied: When there is a link in the NVD vulnerability history table that is classified as patch, its date is collected and report confidence is mapped as Confirmed. In addition, when links labeled as "third party advisory" are found, the status of the corresponding vulnerability is mapped to Reasonable. Note that there is a correlation between this mapping and that of remediation level. The two mappings are similar since the release of an official patch also confirms the existence of the vulnerability by the manufacturer.

Table 1 and Table 2 respectively illustrate the parametrization of CVSS temporal scores for two popular vulnerabilities, WannaCry and HeartBleed.

**Table 1**

| Heartbleed | | | |
|---|---|---|---|
| Relative day (days since vulnerability disclosure) | CVSS given by heuristic | Observed or inferred event | Event type |
| 0 | 3.8 | Disclosed | |
| 0 | 3.8 | Unconfirmed | Report confidence |
| 0 | 4.0 | Reasonable | Report confidence |
| 0 | 4.3 | Confirmed | Report confidence |
| 0 | 3.7 | Official fix | Remediation level |
| 1 | 3.9 | Proof of concept | Exploitability |
| 2 | 4.1 | Functional exploit | Exploitability |
| 3 | 4.4 | High | Exploitability |

**Table 2**

| WannaCry | | | |
|---|---|---|---|
| Relative day (days since vulnerability disclosure) | CVSS given by heuristic | Observed or inferred event | Event type |
| -4 | 6.9 | Confirmed | Report confidence |
| -3 | 6.9 | Official fix | Remediation level |
| 0 | 6.9 | Disclosed | |
| 32 | 7.3 | Proof of concept | Exploitability |
| 56 | 7.7 | Functional exploit | Exploitability |
| 56 | 8.1 | High | Exploitability |

As seen from the above tables, the time of publication of vulnerability events is typically available in terms of a date (i.e., days since vulnerability disclosure). In future implementations, it may be possible to further granularize the time of publication of these events, for example, down to the nearest hour or minute, which would enable tracking the evolution of the temporal risk score in an even more meaningful way.

Continuing with reference to FIG. 1, block 106 involves applying the above-described parametrization methodology to obtain a time series of temporal risk scores (in this case, CVSS temporal scores) associated with each vulnerability, and accounting for all events that the vulnerability will experience during its life cycle. Note that CVSS v3.0 accounts for events from vulnerability disclosure up to announcement of advisories, weaponization (proof-of-concept and fully functional exploits) and patching. The described parametrization methodology may be extended to additionally account for exploitation events, which may, for example, be contemplated by future versions of the CVSS.

The time series of temporal risk scores parametrized from data about a given CVE^{®} identifier is useful to track how risk evolved in retrospect for vulnerabilities for which sufficient historical data is available. In order to use temporal risk scores for predictive purposes for a novel vulnerability for which historical data is insufficient, a model is created which determines how different events impact temporal risk scores, allowing prediction of the time until the occurrence of those events (e.g., exploit releases). To that aim, probabilistic state machines may be used to characterize the states at which a vulnerability is likely to pass during its life cycle. For instance, using a "network of queues", it may be modeled how advisories are disclosed by multiple platforms, where each platform corresponds to queue which adds a delay to the information propagation process. Other analytical and machine learning models may be used to learn patterns from the data.

FIG. 2 illustrates a non-limiting example embodiment of a system architecture for implementing aspects of the present disclosure. The illustrated system 200 is based on a client-server model built on top of multiple software containers interacting with each other, which are depicted by dashed boxes. The client 202 comprises a computing device, which may, for example, be part of an industrial control system. The patch management server 204 comprises one or more computing devices, which may be operated, for example, by a government agency, a control system manufacturer, provider of an industrial control system, or a third party.

The patch management server 204 includes an updater module container 206 that periodically extracts data about reported vulnerabilities from multiple platforms or data sources. In the shown embodiment, the data sources include a primary data source 210, which may include a public vulnerability database (e.g., NVD), and a plurality of enrichment data sources 210a, 210b, 210c...210n, the content of which may be downloaded, for example, by following the hyperlinks to security advisories on these platforms that are reported by NVD for each reported vulnerability. In addition, data be also be extracted from forums, including those in the dark web, and from TI feeds. The updater module 206 may define API calls to get CVE^{®} information and dates of vulnerability events from structured data sources and may implement HTML parsing to extract date and class of vulnerability events from non-structured data sources.

The updater module 206 feeds data about CVE^{®} identifiers obtained from NVD and matched vulnerability events obtained from the multiple enrichment data sources into a database 208. For each vulnerability event, the database 208 contains its publication date, and for each CVE^{®} identifier, the database contains its disclosure dates. In addition, the database 208 also contains a plain text description of the CVE^{®} identifiers, information on their corresponding CVSS scores and sub-scores, products affected, manufacturers of affected products and other information, which may be utilized as vulnerability features to construct a classifier 212. The database 208 is curated with all collected data organized in a relational model. In one embodiment, the classifier 212 utilizes a machine learning model trained on the vulnerability features to classify vulnerabilities into vulnerability classes based on a target criterion (e.g., time to weaponization, or time series cluster), and use statistical information of a vulnerability class to predict a weaponization time of a vulnerability (e.g. date of occurrence of the first weaponization event). The results of the classifier 212 may be used to update the database 208.

The client 202 sends a data request to the patch management server 204, which may specify, for example, the CVE^{®} identifier of one or more vulnerabilities in software or hardware (firmware) for which risk is to be assessed. This input may be provided by a user or may be automatically generated, for example, by a scanning operation of a network including a plurality of assets (e.g., controllers and other field devices of an industrial control system) to identify a list of vulnerabilities per asset for which remedial patches are available for installation.

The client 202 includes a web user interface (web UI) container 214 which may encompass the frontend server and frontend client code. The frontend server may be an HTTP server, e.g., built in a Linux container using a module such as Nginx, or any other HTTP server. All frontend client code seen by the user is also inside the web UI container 214. Once the client 202 posts a data request, the request is issued to a data API container 216 which answers typically with a JSON response. The latter may be used to feed a data visualization module 218 in the client web-front.

The data API 216 is the backend (e.g., using Python Flask), which may be built in a Linux container, which receives HTTP requests from the frontend client web UI 214 and returns a JSON file. The data API 216 communicates with the curated database 208 that stores the description of published CVE^{®} identifiers along with available historical data including information on vulnerability events. The database 208 provides the vulnerability features associated with each CVE^{®} identifier specified in the data request to the classifier 212. The classifier 212 identifies a vulnerability class for the specified CVE^{®} identifier based on its vulnerability features, and may also use statistical information of the identified vulnerability class, to generate a risk curve predicting an evolution of a temporal risk score over time. The temporal risk score may include, for example a CVSS temporal score parametrized based on occurrence of vulnerability events using the above-described heuristic rule-based method. The risk curve is predictive of a time of occurrence of one or more weaponization events and/or exploitation events of the specified CVE^{®} identifier with an associated temporal risk score for each event. Once the final result of the classifier 212 is produced, it is sent to the visualization module 218 in the client web-front.

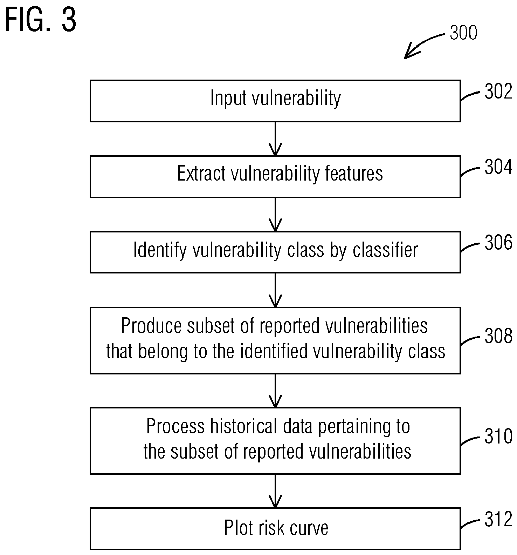

FIG. 3 illustrates a method 300 for assessing risk associated with a vulnerability in accordance with an aspect of the present disclosure. The method may be implemented by the system architecture illustrated in FIG. 2, or by another system architecture.

Block 302 involves receiving an input specifying at least one vulnerability in software or hardware (firmware) for which risk is to be assessed. The input may be posted as a data request from a client device to a patch management server. The input may be manually provided by a user of the client device, or may be automatically generated by a scanning operation of a network including a plurality of assets to identify a list of vulnerabilities per asset for which remedial patches are available for installation. The input may, for example, specify the CVE^{®} identifier of the vulnerabilities for which data is requested.

Block 304 involves extracting vulnerability features of the specified vulnerability, for example, from a curated database as described above. The vulnerability features include defined features that are used to construct a classifier. The vulnerability features may, for example, include at least a subset of features selected from: date of vulnerability disclosure, CVSS base score, CVSS sub-score components, vulnerability description in plain text, CWE^{™} identifier, date of generation of CVSS, date of last modification of event history, product(s) affected by vulnerability, and manufacturers of affected product(s).

Block 306 involves identifying a vulnerability class of the specified vulnerability by the classifier. The classifier may utilize, for example, one or more statistical and/or machine learning models to classify the specified vulnerability based on its extracted vulnerability features. In one embodiment, the classifier uses a trained machine learning model, the machine learning model being trained on the collected data in the database pertaining to reported vulnerabilities to classify vulnerabilities according to a target criterion based on the defined vulnerability features.

An example of a target criterion is a time to occurrence of first weaponization event measured from the time of vulnerability disclosure. In this example, the machine learning model may be trained in a supervised manner with vulnerability classes being predefined based on the target criterion. The time of occurrence of the first vulnerability event may be before, at, or after the time of vulnerability disclosure.

Another example of a target criterion involves identifying a pattern in a timeseries of vulnerability events. In this example, the machine learning model may be initially trained in an unsupervised manner to cluster time series data associated with reported vulnerabilities into vulnerability classes, and subsequently trained in a supervised manner to classify the specified vulnerability into one of the vulnerability classes. The time series data may comprise a time series of the parametrized temporal risk score mapped to vulnerability events.

In other embodiments, alternate to or in addition to machine learning models, the classifier may utilize statistical information for classification, for example, based on products affected by the specified vulnerability and/or manufacturers of such products.

Block 308 involves producing a subset of the reported vulnerabilities that belong to the identified vulnerability class of the specified vulnerability. This subset of reported vulnerabilities may be produced by aggregation of the reported vulnerabilities into classes or clusters by the classifier.

Block 310 involves processing historical data on vulnerability events pertaining to the subset of the reported vulnerabilities to generate, for the specified vulnerability, a risk curve predicting an evolution of a temporal risk score over time. The temporal risk score is parametrized based on occurrence of vulnerability events. The risk curve is predictive of a time of occurrence of one or more weaponization events and/or exploitation events of the specified vulnerability with an associated temporal risk score for each event. In one embodiment, the temporal risk score is a CVSS temporal score parametrized based on the occurrence of vulnerability events using a heuristic rule-based method, an example of which was described above. Block 310 may involve using probabilistic state machines, such as Markov chains (for example, see US10331429 B2), to characterize the states at which the vulnerability is likely to pass during its life cycle.

In one embodiment, the risk curve may be generated by producing, from the identified vulnerability class, a cumulative distribution function (CDF) of time to occurrence of first weaponization event measured from the time of vulnerability disclosure, and normalizing a range of the cumulative distribution function to reflect the evolution of temporal risk score over time for the specified vulnerability.

In another embodiment, the risk curve may be generated by plotting, from the identified vulnerability class, a time series of predicted vulnerability events each associated with a respective temporal risk score, the risk curve further depicting a defined confidence interval of the plot.

In particular, when the collected data includes information on exploitation of vulnerabilities in the wild, the risk curve may be predictive of the time of occurrence at least one exploitation event of the specified vulnerability. Thus, vulnerability exploitation insights, such as that obtained from TI feeds, may be turned into visual insights for patching decision makers. Insights on predicted exploitation events may be particularly useful in patching prioritization, since an imminent or past exploitation event presents a significantly higher risk associated with the vulnerability. In some implementations, the temporal risk scoring may be adapted to account for exploitation events, for example, in future versions of the CVSS, or another scoring system, whereby an associated temporal risk score may be measured for a predicted exploitation event.

The visualization option of the risk curve may be determined independent of the target criterion used for classification. In one embodiment, multiple risk curves may be generated based on the identified vulnerability class.

Furthermore, if historical data on vulnerability events is available for the specified vulnerability, then the historical data of the specified vulnerability may be processed to generate a risk curve depicting an actual evolution of the parametrized temporal risk score over time for the specified vulnerability.

Finally, block 310 comprises producing a visual plot of the generated risk curve(s). The risk curve(s) may be graphically displayed, for example by a visualization module in a client web-front. In one embodiment, the visualization module may be configured to superimpose multiple risk curves, for example including at least one predicted risk curve and one actual risk curve.

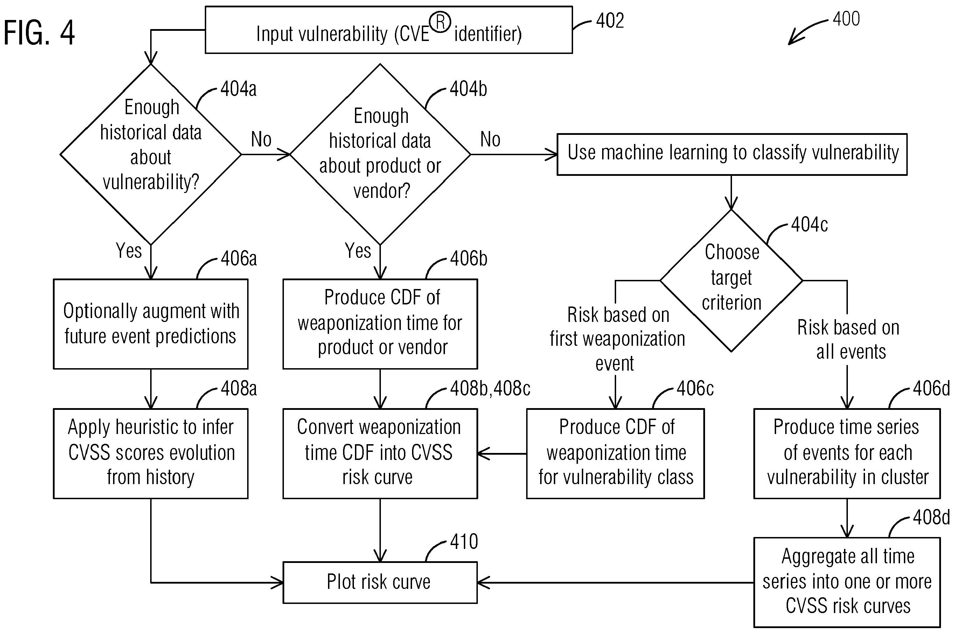

FIG. 4 is a flowchart that expands on the overview presented in FIG. 3, showing an exemplary method 400 for generating one or more risk curves for a specified vulnerability based on multiple classification approaches.

At block 402, an input is received specifying at least one vulnerability for which risk is to be assessed. The input may be provided, for example, by a user looking for a vulnerability or product (or class of vulnerabilities or products, e.g., through the corresponding vendor). Alternately, the input may be generated by automatically scanning connected assets of a network to identify unresolved vulnerabilities for which patches are available for installation. In the illustrated embodiment, the input specifies the CVE^{®} identifier of the at least vulnerability. Optionally, the input may additionally specify asset specific information, for example, related to the environmental CVSS sub-score (i.e., environmental sub-score modifiers, such as modified attack vector (MAV)). The input may also inform the prioritization of patches based on asset data (e.g. how critical is each asset and if it can be rebooted). In this scenario, the output may be augmented to account for environmental aspects, such as whether the asset under consideration is connected to the Internet, when generating the risk curves.

The next step involves extracting available data pertaining to the specified vulnerability from a curated database, for example, including, its CVSS score and CVSS sub-scores, date of release, textual description, as well as historical data including vulnerability events (e.g., security advisories). Based on the availability of historical data, decisions may be implemented at decision blocks 404a and 404b.

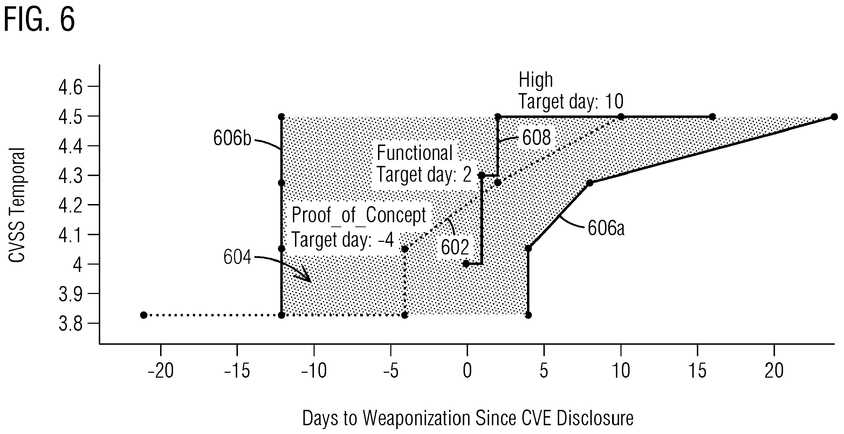

First, at decision block 404a, it is determined whether enough historical data on vulnerability events is available for the specified vulnerability. If yes, then at block 408a, the above-described heuristic rule-based method is applied to parametrize the CVSS temporal score based on the vulnerability events obtained from the historical data. By mapping the CVSS temporal score to historical events, a risk curve depicting a historical evolution of the CVSS temporal score over time is generated. Optionally, at an intermediate block 406a, the historical data may be augmented with future event predictions based on a classifier utilizing statistical and/or machine learning models as described hereinafter. Block 410 involves visually plotting the risk curve generated at block 408a. An exemplary risk curve (see FIG. 6, curve 608) has the CVSS temporal score represented along the y-axis and time (with day 0 corresponding to the day of vulnerability disclosure) represented along the x-axis, with the current day marked, as well as with the significant weaponization events indicated (e.g., using labels and arrows to indicate "proof of concept", "functional exploit" and so on). The knowledge of historical risk evolution can help, for instance, to determine for how long risk has surpassed a given threshold. The longer the risk sustained high levels, the more likely it is that an incident will occur.

If historical data is insufficient or not available for the specified vulnerability, data about a population of vulnerabilities in an identified vulnerability class may be leveraged, using a classifier, to infer or predict how risk will evolve over time for the specified vulnerability.

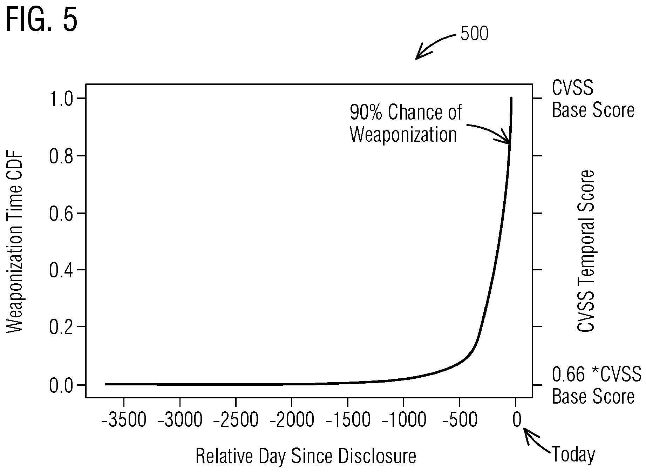

In the illustrated embodiment, if at block 404a it is determined that enough historical data is not available for the specified vulnerability, control moves to the decision block 404b, where it is determined whether enough historical data is available about the product affected by the specified vulnerability or a vendor of the product. If yes, then at block 406b, a vulnerability class of the specified vulnerability is identified by a classifier based on statistical information pertaining to reported vulnerabilities associated with the product or vendor. Next, a subset of the population of reported vulnerabilities that belong to the identified vulnerability class are aggregated. Subsequently, historical data on vulnerability events pertaining to this subset of vulnerabilities is processed to produce a CDF of weaponization time for the identified vulnerability class. The weaponization time herein refers to a time to occurrence of first weaponization event measured from the time of vulnerability disclosure. The time of occurrence of the first vulnerability event may be before, at, or after the time of vulnerability disclosure. An example of a CDF representation is shown in FIG. 5 where the CDF (ranging from 0 to 1) is represented along the y-axis and the time from vulnerability disclosure is represented along the x-axis with the current date indicated. At block 408b, the above-described CDF representation is converted into a risk curve of the specified vulnerability depicting an evolution of CVSS temporal score over time. This may be achieved, for example, by normalizing the range of the weaponization time CDF using the CVSS base score associated with the specified vulnerability. Since CVSS v2.0 and v3.0 allow the temporal score to range from 66% to 100% of the base score, the range of the weaponization time CDF may be normalized in this case such that: the lower limit (CDF=0) corresponds to a CVSS temporal score which equals 0.66^{∗}(CVSS base score); and the upper limit (CDF=1) corresponds to a CVSS temporal score which equals 1.0^{∗}(CVSS base score). Block 410 involves visually plotting the risk curve generated at block 408b.

If at block 404b, it is determined that enough historical data is not available for the product or vendor associated with the specified vulnerability, a classifier using a machine learning model is used to identify a vulnerability class of the specified vulnerability based on the extracted vulnerability features and a target criterion.

The target criterion is determined at decision block 404c. Depending on the target criterion selected, a supervised or an unsupervised classifier may be used. For example, if the target criterion is based on a predefined metric, such as time to occurrence of first weaponization event measured from time of vulnerability disclosure (referred to as weaponization time), a supervised classifier, such as a gradient boosting based machine learning model, may be employed. If the target criterion involves finding patterns without predefined target classes, such as a time series of all vulnerability events, an unsupervised classifier, such as a hierarchical dendrogram, may be employed. The illustrated embodiment presents each of the above approaches.

If the target criterion is weaponization time, control moves to block 406c. At block 406c, the vulnerability class of the specified vulnerability is identified by a classifier utilizing a machine learning model trained in a supervised manner with vulnerability classes being predefined based on the target criterion. Next, a subset of the population of reported vulnerabilities that belong to the identified vulnerability class are aggregated. Subsequently, historical data on vulnerability events pertaining to this subset of vulnerabilities is processed to produce a CDF of weaponization time for the identified vulnerability class (see FIG. 5). A non-limiting example embodiment of the processing at block 406c is illustrated hereinafter in *Modeling Example 1.* At block 408c, the CDF representation is converted into a risk curve of the specified vulnerability depicting an evolution of CVSS temporal score over time. This may be achieved, as described above for block 408b, by normalizing the range of the weaponization time CDF using the CVSS base score associated with the specified vulnerability. Block 410 involves visually plotting the risk curve generated at block 408b.

If the target criterion is a pattern in a time series of all vulnerability events, control moves to block 406d. At block 406d, the vulnerability class of the specified vulnerability is identified by a classifier utilizing a machine learning model, which is initially trained in an unsupervised manner to cluster time series data associated with reported vulnerabilities into vulnerability classes, and subsequently trained in a supervised manner to classify the specified vulnerability into one of the vulnerability classes. The time series data may comprise a time series of the parametrized CVSS temporal score mapped to vulnerability events. Next, a subset of the population of reported vulnerabilities that belong to the identified vulnerability class are aggregated. Subsequently, historical data on vulnerability events pertaining to this subset of vulnerabilities is processed to produce a time series of events for each vulnerability in the cluster. At block 408d, the time series of the cluster are aggregated into one or multiple risk curves. The one or more risk curves are generated by plotting, from the identified vulnerability class, a time series of predicted vulnerability events each associated with a respective CVSS temporal score, with a defined confidence interval of the plot being depicted (see FIG. 6). The curves obtained by this approach are similar to that obtained at block 408a, but now they correspond to predictions based on the vulnerability class rather than the vulnerability history. Block 410 involves visually plotting the risk curve generated at block 408c. A non-limiting example embodiment of the processing at block 406d and 408d is illustrated hereinafter in *Modeling Example* 2.

In various embodiments, two or more of the approaches illustrated in FIG. 4 may be executed in parallel, producing multiple risk curves to be presented to the user, who may then then decide which action to take based on perspectives which may span a range of risk-sensitivity from more to less conservative. Also, to simplify presentation, the various approaches were distinguished based on the presence of full information or the total absence of information. In reality, there may be a spectrum of available information levels, which will naturally lead to more significance of having one approach complementing or augmenting the other.

In a further embodiment, the plot produced at block 410 may also display a maintenance schedule of the plant, to aid determining an optimal patch installation date for the specified vulnerability. To that end, the described system may interact with a production scheduling system, such as a manufacturing execution system (MES).

### Modelling Example 1

In this example, a machine learning model is trained using the vulnerability features associated with a vulnerability to predict, with a certain level of confidence, the weaponization time, which is the time to occurrence of the first weaponization event (i.e., when its first exploit will be made available) measured from the time of vulnerability disclosure. The machine learning model may, for instance, be based on an algorithm under the framework of gradient boosting, such as XGBoost.

The risk prediction is implemented as the solution of a classification problem, where each association between a weaponization event and a vulnerability corresponds to a sample of the target metric, defined by weaponization time. This metric represents the day of the appearance of a weaponization event, assuming the day of disclosure of the vulnerability to be day zero. For example, if a vulnerability was disclosed on September 24, 2014 and the first weaponization event for this vulnerability appeared on September 23, 2014, then its weaponization time is -1.

The vulnerability classes are predefined based on the metric of weaponization time. To illustrate, the vulnerability classes may be defined as follows: (i) Class 1: samples with a value of weaponization time less than or equal to -31; (ii) Class 2: samples with a value of weapon weaponization time between -30 and -4; (iii) Class 3: samples with weaponization time between -3 and 0; (iv) Class 4: samples with weaponization time greater than 0. The classes may be generated based on the available data on reported vulnerabilities so that they are balanced with respect to the number of instances in each class.

Among the characteristics (vulnerability features) of the reported vulnerabilities that are used for training, the following may be highlighted: date of disclosure of the vulnerability, date of generation of CVSS, date of last modification of event history, CVSS base score, CVSS sub-score components that represent characteristics on impact and exploitation, product affected by vulnerability; and manufacturers of the affected product.

The machine learning model is trained with the vulnerability features where each reported vulnerability in the training data is labeled with a vulnerability class based on its weaponization time obtained from historical data. In order to increase the accuracy of the model, some parameters of the algorithm (e.g., XGBoost) may be tuned. The tuned parameters include parameters that add constraints to the architecture of the trees and can be used to control their complexity, which may make the model more or less susceptible to overfitting. The tuned parameters may also include parameters that control the sampling of the data set at each iteration of the algorithm in order to construct a tree with slightly different data at each step, which may also make the model less likely to overfitting.

Using the trained machine learning model, a specified vulnerability is classified into one of the predefined vulnerability classes. A population of reported vulnerabilities that belong to the identified vulnerability class is aggregated. Next, historical data on vulnerability events pertaining to this population of vulnerabilities is processed to produce a CDF of weaponization time for the identified vulnerability class.

FIG. 5 shows a curve 500 depicting a CDF visualization of weaponization time prediction using the XGBoost model. Here, the weaponization time CDF (ranging from 0 to 1) is represented along the y-axis and the time from vulnerability disclosure is represented along the x-axis with the current date indicated. For instance, when the risk reaches 90% of its threshold, it leads to an inference that there is a 90% chance of weaponization for that vulnerability in that day.

### Modelling Example 2:

This example represents a hybrid approach for weaponization prediction. The basic methodology herein is to classify vulnerabilities to group them into classes using unsupervised machine learning and classify novel vulnerabilities using supervised machine learning.

The machine learning model starts with clustering of time series of vulnerability events. Each time series represents a curve of risk evolving over time and each point in the series corresponds to a vulnerability event in the vulnerability life cycle, where each event can increase or decrease the risk accordingly. The time series clustering objective is to capture trends and patterns of risk evolution and group similar time series into clusters that later will be used as classes for classifying vulnerabilities. The time series is parameterized, in this case, using the CVSS temporal score based on the heuristic rule-based method described above.

Using the clustered time series as classes, supervised machine learning is applied to classify novel vulnerabilities that do not contain historical data about events in its vulnerability life cycle. This happens because when a new vulnerability is disclosed, NVD does not publish historical data of vulnerability events and, thus, it is not possible to create time series of novel vulnerabilities. When a vulnerability is disclosed, it is important to assess its risk even if there is no historical data for that vulnerability.

To address this challenge, the classification phase uses vulnerability features that are available on disclosure in a decision tree to classify a vulnerability into one of the classes generated by the clustering phase. The training of the decision tree takes into consideration vulnerability features such as CVSS base score, CVSS sub-score components, vulnerability description in plain text, vendor, product, CWE^{™} identifier and others. So instead of just using historical data of events and the parameterized CVSS temporal score, which are not available at the time of vulnerability disclosure, the classification phase takes into consideration vulnerability features of all reported vulnerabilities (that are available in the database) in the time series.

The model is typically trained with multiple sets of parameters in a search for the best combination of parameters. A grid search may be used, which combines all the parameters to search for the combination that results in the best accuracy. The grid search finds the best combination of the parameters by measuring the resulting model performance, which is a measurement made using the predictive capabilities of the resulting model. There are multiple ways of measuring the performance of a model. For example, the following metrics may be used for measurement of performance: accuracy, precision, recall and F1 Score.

This example uses hurricane forecasting visualization techniques to predict when an event will be likely to occur based on historical data of events in the time series. After classifying the vulnerability into a class, the model fetches all samples of weaponization events for that class and then simple statistical measures, like mean and standard deviation, to compute the estimated date of weaponization with its confidence interval.

FIG. 6 illustrates a hurricane forecasting based visualization of a risk curve. Herein, the parametrized CVSS temporal score is represented along the y-axis and time (with day 0 corresponding to the day of vulnerability disclosure) is represented along the x-axis. The predicted risk curve generated by this model is shown by the dotted curve 602. The curve 602 depicts a time series of predicted vulnerability events, each associated with a respective temporal risk score. The significant weaponization events are indicated (e.g., "proof of concept", "functional exploit" and "high"). The shaded region 604 defines a confidence interval of the curve 602. In this example, the confidence interval 604 is bound by the curve 606a representing a standard deviation of +1 and the curve 606b representing a standard deviation of -1. The visualization also superimposes a historical risk curve 608 depicting a time series of vulnerability events from historical data, each associated with a respective temporal risk score (possible only when historical data is available). The historical risk curve 608, when available, serves as the ground truth providing insight on how the vulnerability risk has evolved over time.

When information on exploitation events of reported vulnerabilities is collected (e.g., from TI feeds), the predicted risk curve 602 may be augmented to depict the time of occurrence of one or more predicted exploitation events. Depending on the scoring system used, the predicted exploitation events may be depicted with or without a temporal risk score. The present example uses temporal scores defined by CVSS v2.0 or 3.0 which do not account for exploitation events. In this case, predicted exploitation events may be depicted at the highest risk level (e.g., to the right of the weaponization event designated as "High").

In one embodiment, the visualization may comprise a spaghetti plot displaying multiple representative risk curves based on the identified vulnerability class, instead of or in addition to a plot based on mean values of the class as depicted in FIG. 6.

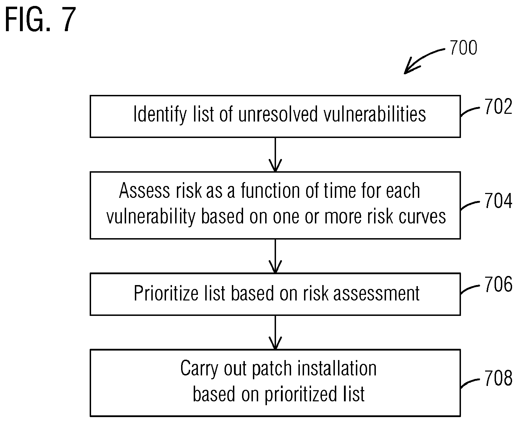

FIG. 7 illustrates a method 700 for management of patch installation according to a further aspect of the disclosure. In the example embodiment described herein, the method 700 is implemented to manage patch installation in an industrial control system.

Block 702 involves identifying a list of unresolved vulnerabilities pertaining to one or more assets of the industrial control system. The vulnerabilities may affect hardware and/or software associated with the one or more assets. The list may include vulnerabilities associated with each software product installed at each asset for which a patch is available for installation. In one embodiment, the list is generated by an automated scanning operation on the one or more assets. Block 704 involves assessing risk as a function of time for each vulnerability specified in the list, by generating at least one risk curve per vulnerability by a method according to one or more of the above-described embodiments. The above-described process for generating one or multiple risk curves is thus repeated for each vulnerability affecting the system, each patch available for installation, and each software product installed at an asset. For each vulnerability, based on the distance between the temporal risk score at the current day and the envisioned patching date, a user may assess the instants at which risk will be maximum. Block 706 involves prioritizing the list of vulnerabilities based on the assessed risk of each vulnerability. For example, based on the one or more risk curves per vulnerability, an ordered list of vulnerabilities may be created, which would pose the maximum risk in the shortest time. Block 708 involves implementing installation of patches on the one or more assets to remediate the vulnerabilities based on the prioritized list of vulnerabilities. In one embodiment, an optimal patching date for each specified vulnerability may be automatically determined based on an interaction with a production scheduling system, such as a manufacturing execution system (MES), to synchronize patch installation with a plant maintenance schedule.

The embodiments of the present disclosure may be additionally used to provide support for a what-if analysis. For example, the tracking of historical data about vulnerability-related events allows a user to reproduce through what-if analysis what would have occurred if a different strategy for patch management was taken. This enables a plant operator to trade off the risk of patch deferral with the vulnerability exploitation risk, and to predict the potential risks based on what-if analysis. Also, the solution accuracy is customizable as it allows the user to consider new classes of vulnerabilities, e.g., based on the vendor or product corresponding to the vulnerabilities.

Furthermore, the embodiments of the present disclosure may be efficiently implemented. Some of the risk curves produced by the considered models can be pre-computed, in an off-line manner, allowing for the operator to quickly assess how risk evolved over time for a given class of vulnerabilities. As additional data is collected about the vulnerabilities, the models can be tuned, e.g., taking the current predictions as the initial condition of the classifier and fine tuning the classification using the new data.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only. Modifications to the current design may be implemented by those skilled in the art, without departing from the scope of the disclosure.

### Further embodiments:

1. A computer-implemented method for assessing risk over time of a vulnerability associated with a software product or hardware device, the method comprising:
   collecting data pertaining to reported vulnerabilities from one or more platforms into a database, the collected data being curated to provide defined vulnerability features and historical data on vulnerability events pertaining to the reported vulnerabilities,
   receiving an input specifying a vulnerability for which risk is to be assessed, extracting vulnerability features of the specified vulnerability from the database and feeding the extracted vulnerability features to a classifier to identify a vulnerability class of the specified vulnerability,
   producing a subset of the reported vulnerabilities that belong to the identified vulnerability class of the specified vulnerability, and
   processing historical data on vulnerability events pertaining to said subset of the reported vulnerabilities to generate, for the specified vulnerability, a risk curve predicting an evolution of a temporal risk score over time, the temporal risk score parametrized based on occurrence of vulnerability events,
   the risk curve predictive of a time of occurrence of one or more weaponization events and/or one or more exploitation events of the specified vulnerability with an associated temporal risk score thereof.
2. The method according to embodiment 1, wherein the classifier utilizes a trained machine learning model, the machine learning model being trained on the collected data pertaining to reported vulnerabilities to classify vulnerabilities according to a target criterion based on the defined vulnerability features.
3. The method according to embodiment 2, wherein the target criterion is a time to occurrence of first weaponization event measured from the time of vulnerability disclosure, wherein the machine learning model is trained in a supervised manner with vulnerability classes being predefined based on the target criterion.
4. The method according to embodiment 2, wherein the target criterion is a pattern in a timeseries of vulnerability events, wherein the machine learning model is initially trained in an unsupervised manner to cluster time series data associated with reported vulnerabilities into vulnerability classes, and subsequently trained in a supervised manner to classify the specified vulnerability into one of the vulnerability classes.
5. The method according to any of embodiments 2 to 4, wherein the risk curve is generated by producing, from the identified vulnerability class, a cumulative distribution function of time to occurrence of first weaponization event measured from the time of vulnerability disclosure, and normalizing a range of the cumulative distribution function to reflect the evolution of temporal risk score over time for the specified vulnerability.
6. The method according to any of embodiments 2 to 4, wherein the risk curve is generated by plotting, from the identified vulnerability class, a time series of predicted vulnerability events each associated with a respective temporal risk score, the risk curve further depicting a defined confidence interval of the plot.
7. The method according to any of embodiments 1 to 6, wherein the defined vulnerability features provided by curating the collected data include at least a subset of features selected from: date of vulnerability disclosure, Common Vulnerability Scoring System (CVSS) base score, CVSS sub-score components, vulnerability description in plain text, Common Weakness Enumeration (CWE^{™}) identifier, date of generation of CVSS, date of last modification of event history, product(s) affected by vulnerability, and manufacturers of affected product(s).
8. The method according to any of embodiments 1 to 7, wherein the historical data provided by curating the collected data comprises an event class and a time of occurrence of each vulnerability event.
9. The method according to any of embodiments 1 to 8,
   wherein the one or more platforms from which data is collected comprise at least one public vulnerability database, and
   wherein collecting the data comprises, for each vulnerability reported on the public vulnerability database, following hyperlinks reported on the public vulnerability database to security advisories on other platforms, and downloading hyperlinked files pertaining to the security advisories from the other platforms, the security advisories representing vulnerability events.
10. The method according to embodiment 9, wherein the collected data is curated by extracting temporal information of the downloaded files using XML Path Language, wherein the extracted temporal information is representative of the time of occurrence of the vulnerability events represented by the security advisories.
11. The method according to any of embodiments 1 to 10, wherein the temporal risk score is a Common Vulnerability Scoring System (CVSS) temporal score parametrized based on the occurrence of vulnerability events using a heuristic rule-based method.
12. The method according to any of embodiments 1 to 11, further comprising:
   if historical data on vulnerability events is available for the specified vulnerability, then processing the historical data of the specified vulnerability to generate a risk curve depicting an actual evolution of the parametrized temporal risk score over time for the specified vulnerability.
13. A non-transitory computer-readable storage medium including instructions that, when processed by a computer, configure the computer to perform the method according to any of embodiments 1 to 12.
14. A method for management of patch installation, comprising:
   identifying a list of vulnerabilities pertaining to one or more assets,
   assessing risk over time for each vulnerability specified in the list by generating at least one risk curve per vulnerability by a method according to any of embodiments 1 to 12, prioritizing the list of vulnerabilities based on the assessed risk of each vulnerability, and
   implementing installation of patches on the one or more assets to remediate the vulnerabilities based on the prioritized list of vulnerabilities.
15. The method according to embodiment 14, wherein the one or more assets are part of an industrial control system, the method comprising automatically determining a patching date for each specified vulnerability based on an interaction with a production scheduling system, to synchronize patch installation with a plant maintenance schedule.

## Claims

1. A computer-implemented method for assessing risk over time of a vulnerability associated with a software product or hardware device, the method comprising:
collecting data pertaining to reported vulnerabilities from one or more platforms into a database, the collected data being curated to provide defined vulnerability features and historical data on vulnerability events pertaining to the reported vulnerabilities,
receiving an input specifying a vulnerability for which risk is to be assessed,
extracting vulnerability features of the specified vulnerability from the database and feeding the extracted vulnerability features to a classifier to identify a vulnerability class of the specified vulnerability,
producing a subset of the reported vulnerabilities that belong to the identified vulnerability class of the specified vulnerability, and
processing historical data on vulnerability events pertaining to said subset of the reported vulnerabilities to generate, for the specified vulnerability, a risk curve predicting an evolution of a temporal risk score over time, the temporal risk score parametrized based on occurrence of vulnerability events,
the risk curve predictive of a time of occurrence of one or more weaponization events and/or one or more exploitation events of the specified vulnerability with an associated temporal risk score thereof.

2. The method according to claim 1, wherein the classifier utilizes a trained machine learning model, the machine learning model being trained on the collected data pertaining to reported vulnerabilities to classify vulnerabilities according to a target criterion based on the defined vulnerability features.

3. The method according to claim 2, wherein the target criterion is a time to occurrence of first weaponization event measured from the time of vulnerability disclosure, wherein the machine learning model is trained in a supervised manner with vulnerability classes being predefined based on the target criterion.

4. The method according to claim 2, wherein the target criterion is a pattern in a timeseries of vulnerability events, wherein the machine learning model is initially trained in an unsupervised manner to cluster time series data associated with reported vulnerabilities into vulnerability classes, and subsequently trained in a supervised manner to classify the specified vulnerability into one of the vulnerability classes.

5. The method according to any of claims 2 to 4, wherein the risk curve is generated by producing, from the identified vulnerability class, a cumulative distribution function of time to occurrence of first weaponization event measured from the time of vulnerability disclosure, and normalizing a range of the cumulative distribution function to reflect the evolution of temporal risk score over time for the specified vulnerability.

6. The method according to any of claims 2 to 4, wherein the risk curve is generated by plotting, from the identified vulnerability class, a time series of predicted vulnerability events each associated with a respective temporal risk score, the risk curve further depicting a defined confidence interval of the plot.

7. The method according to any of claims 1 to 6, wherein the defined vulnerability features provided by curating the collected data include at least a subset of features selected from: date of vulnerability disclosure, Common Vulnerability Scoring System (CVSS) base score, CVSS sub-score components, vulnerability description in plain text, Common Weakness Enumeration (CWE^{™}) identifier, date of generation of CVSS, date of last modification of event history, product(s) affected by vulnerability, and manufacturers of affected product(s).

8. The method according to any of claims 1 to 7, wherein the historical data provided by curating the collected data comprises an event class and a time of occurrence of each vulnerability event.

9. The method according to any of claims 1 to 8,
wherein the one or more platforms from which data is collected comprise at least one public vulnerability database, and
wherein collecting the data comprises, for each vulnerability reported on the public vulnerability database, following hyperlinks reported on the public vulnerability database to security advisories on other platforms, and downloading hyperlinked files pertaining to the security advisories from the other platforms, the security advisories representing vulnerability events.

10. The method according to claim 9, wherein the collected data is curated by extracting temporal information of the downloaded files using XML Path Language, wherein the extracted temporal information is representative of the time of occurrence of the vulnerability events represented by the security advisories.

11. The method according to any of claims 1 to 10, wherein the temporal risk score is a Common Vulnerability Scoring System (CVSS) temporal score parametrized based on the occurrence of vulnerability events using a heuristic rule-based method.

12. The method according to any of claims 1 to 11, further comprising:
if historical data on vulnerability events is available for the specified vulnerability, then processing the historical data of the specified vulnerability to generate a risk curve depicting an actual evolution of the parametrized temporal risk score over time for the specified vulnerability.

13. A non-transitory computer-readable storage medium including instructions that, when processed by a computer, configure the computer to perform the method according to any of claims 1 to 12.

14. A method for management of patch installation, comprising:
identifying a list of vulnerabilities pertaining to one or more assets,
assessing risk over time for each vulnerability specified in the list by generating at least one risk curve per vulnerability by a method according to any of claims 1 to 12,
prioritizing the list of vulnerabilities based on the assessed risk of each vulnerability, and
implementing installation of patches on the one or more assets to remediate the vulnerabilities based on the prioritized list of vulnerabilities.

15. The method according to claim 14, wherein the one or more assets are part of an industrial control system, the method comprising automatically determining a patching date for each specified vulnerability based on an interaction with a production scheduling system, to synchronize patch installation with a plant maintenance schedule.
